# EUROPEAN PATENT APPLICATION

(11) **EP 4 836 124 A1**
(43) Date of publication of application: **04.11.2026**
(21) Application number: 24912376.1
(22) Date of filing: 11.12.2024
(51) Int. Cl.: H01M 50/213, H01M 50/204, H01M 50/264, H01M 50/271, H01M 50/291

(54) **BATTERY PACK**

(30) Priority: 26.12.2023 JP 2023219803
(71) Applicant: Panasonic Intellectual Property Management Co., Ltd., Kadoma-shi, Osaka 571-0057 (JP)
(72) Inventor: OSHIMA, Yasufumi, kadoma-shi, Osaka 571-0057 (JP); KUMAGAI, Masashi, kadoma-shi, Osaka 571-0057 (JP); SHIMIZU, Yugo, kadoma-shi, Osaka 571-0057 (JP)
(74) Representative: Eisenführ Speiser
(86) International application number: PCT/JP2024/043814
(87) International publication number: WO 2025/142487

(57) **Abstract**

A battery pack includes a core pack including battery blocks coupled linearly to one another, an outer casing accommodating the core pack therein, and a securing part. The outer casing includes an outer tubular part, a first lid, and a second lid. The securing part includes a coupling shaft inserted into the battery blocks, a coupling nut, and a setscrew. The coupling nut includes: a first threaded hole provided in one end of the coupling nut, the threaded portion of the coupling shaft being screwed in the first threaded hole; and a second threaded hole provided in another end of the coupling nut, the setscrew being screwed in the second threaded hole. The core pack secures the battery blocks stacked with the coupling nut and the coupling shaft clamping the battery blocks therebetween such that the plurality of battery blocks are stacked on one another. The setscrew passes through the first lid and is screwed in the second threaded hole of the coupling nut to secure the first lid to the core pack.

## Description

### TECHNICAL FIELD

The present disclosure relates to a battery pack including a battery core pack including battery blocks coupled to one another in a longitudinal direction therein and an outer casing accommodating the core pack therein.

### BACKGROUND ART

Battery packs including battery cells connected in series or parallel to one another are used for applications requiring high power, such as electric bicycles and power-assisted bicycles. This battery pack is manufactured by coupling battery blocks each including battery cells to form a battery core pack, and subsequently accommodating this core pack in an outer casing. This battery pack is elongated so that the battery pack is best suited for applications such as bicycles and is useful from the perspective of storage, with a structure in which the battery blocks are stacked on one another in a longitudinal direction to form an elongated core pack, which is subsequently accommodated in the outer casing. In a battery pack for this application, each battery block includes cells, and the battery blocks are stacked on one another in a longitudinal direction to form a battery core pack, which is subsequently accommodated in an outer casing (PTL 1).

### CITATION LIST

### Patent Literature

PTL 1: International Publication No. WO 2022/163473

### SUMMARY OF INVENTION

FIGS. 13 and 14 are exploded perspective views of battery pack 900 disclosed in PTL 1. In battery pack 900 illustrated in the drawings, battery blocks 903 are stacked on one another and coupled and secured with coupling shaft 921 to form core pack 910, and core pack 910 is inserted into tubular part 941 of outer casing 940. Outer casing 940 having a tubular shape with opposite open ends is covered with lids 942 and 944 at the opposite ends of tubular part 941. Lid 942 is coupled to core pack 910 with setscrews 925 passing through the lid, and prevents lid 942 and core pack 910 from being coupled with each other with sufficient coupling strength.

In battery block 903 of battery core pack 910, the battery cells are often arranged at fixed positions with plastic battery holder 904 for the purpose of electrical insulation and enabling cost-effective mass production. Therefore, core pack 910 accommodating therein battery blocks 903 stacked on one another has a structure in which lid 942 is secured to core pack 910 with metal setscrews 925 screwed in plastic battery holder 904 (a resin part). Plastic battery holder 904 is not likely to provide sufficient threaded engagement strength for setscrews 925 hardly securing lid 942 to core pack 910 firmly. Furthermore, threaded engagement portions may loosen when the battery pack is subject to vibration, and the plastic in the threaded engagement portions may be damaged due to crack propagation when the battery pack is dropped, hardly ensuring high resistance to vibration and drop impact. A rigid member, such as a metallic member, may be provide to a region of core pack 910 that receives setscrew 925 therein for enhanced strength for securing lid 942. However, this configuration may provide a problem that this structure increases the manufacturing cost of core pack 910.

The present disclosure solves the above problem; one of purposes of the present disclosure is to provide a battery pack in which a core pack and a first lid of an outer casing are rigidly coupled to ensure high resistance to vibration and drop impact.

A battery pack according to an aspect of the present disclosure includes all the following features (a) to (g).

The battery pack includes all the following features (a) to (g).
(a) The battery pack includes:
   a core pack including a plurality of battery blocks coupled linearly to one another;
   an outer casing accommodating the core pack therein; and
   a securing part coupling the outer casing to the core pack.
(b) The outer casing includes:
   an outer tubular part accommodating the core pack therein;
   a first lid covering a first end of the outer tubular part; and
   a second lid covering a second end of the outer tubular part.
(c) The securing part includes:
   a coupling shaft coupling the plurality of battery blocks to one another in a longitudinal direction;
   a coupling nut coupled to an end of the coupling shaft; and
   a setscrew passing through the first lid of the outer casing and coupled to the coupling nut.
(d) The coupling shaft includes a threaded portion inserted into the plurality of battery blocks.
(e) The coupling nut includes:
   a first threaded hole provided in one end of the coupling nut, the threaded portion of the coupling shaft being screwed in the first threaded hole; and
   a second threaded hole provided in another end of the coupling nut, the setscrew being screwed in the second threaded hole.
(f) The core pack secures the plurality of battery blocks with the coupling nut and the coupling shaft screwed in the first threaded hole of the coupling nut clamping the plurality of battery blocks between the coupling nut and the coupling shaft such that the plurality of battery blocks are stacked on one another.
(g) The setscrew passes through the first lid and is screwed in the second threaded hole of the coupling nut to secure the first lid of the outer casing to the core pack.

This battery pack has high impact resistance because the core pack is rigidly coupled to the first lid of the outer casing.

### BRIEF DESCRIPTION OF DRAWINGS

FIG. 1 is a schematic exploded perspective view of a battery pack according an exemplary embodiment of the present disclosure.
FIG. 2 is a schematic perspective view of a core pack illustrated in FIG. 1.
FIG. 3 is a schematic exploded perspective view of the core pack illustrated in FIG. 2.
FIG. 4 is a schematic horizontal cross-sectional view of the battery pack.
FIG. 5 is a schematic vertical cross-sectional view of the battery pack.
FIG. 6 is an enlarged cross-sectional view of a main part of the battery pack for illustrating an example of a securing part.
FIG. 7 is an enlarged cross-sectional view of another example of the securing part.
FIG. 8 is a schematic partially enlarged cross-sectional view of the battery pack for illustrating an example of a waterproof structure of an outer tubular part and a first lid.
FIG. 9 is a schematic partially enlarged cross-sectional view of the battery pack for illustrating another example of the waterproof structure of the outer tubular part and the first lid.
FIG. 10 is a schematic partially enlarged cross-sectional view of the battery pack for illustrating still another example of the waterproof structure of the outer tubular part and the first lid.
FIG. 11 is an enlarged cross-sectional view of the battery pack for illustrating an area where a second end of the outer casing is located.
FIG. 12 is an enlarged cross-sectional view of another example of the securing part.

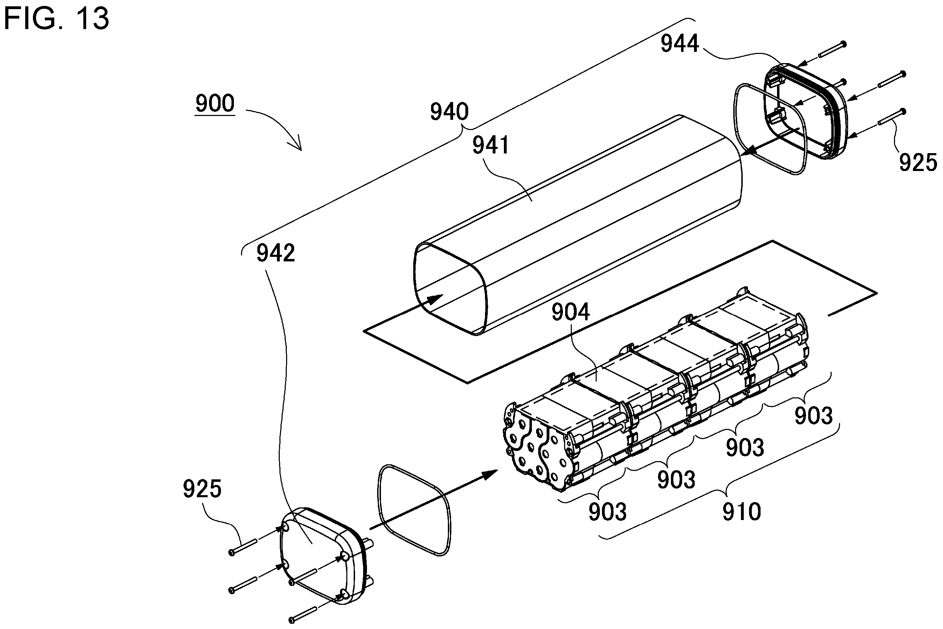

FIG. 13 is a schematic exploded perspective view of a conventional battery pack.

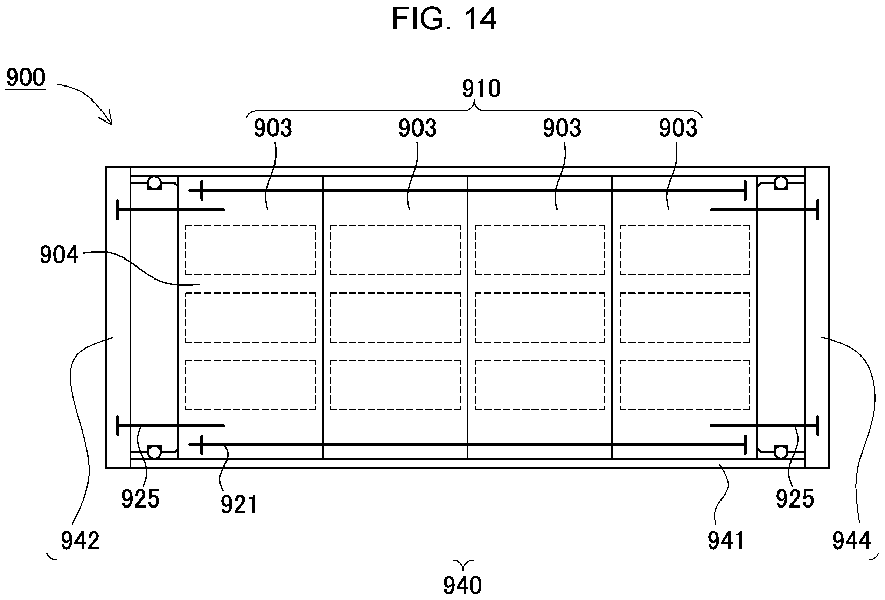

FIG. 14 is a schematic cross-sectional view of the conventional battery pack.

### DESCRIPTION OF EMBODIMENT

Hereinafter, an exemplary embodiment of the present disclosure will be described with reference to the drawings. Note that the exemplary embodiment described below is mere illustrations of a battery pack for embodying the technical idea of the present disclosure; the battery pack according to the present disclosure is not limited to that described below. The present specification should not be considered limiting in any way the members recited in the claims to the members indicated in the exemplary embodiment. In particular, the dimensions, materials, shapes, and relative positioning of components indicated in the exemplary embodiment are not intended to limit the scope of the present disclosure thereto, but are merely exemplary, unless otherwise specifically noted. Note that the drawings are simplified, generalized, or schematic for explanatory purposes; the sizes, positional relationships, and the like of the members illustrated in the drawings may be exaggerated to facilitate a clear understanding. In the following description, the same name and reference signs indicate the same or similar members, and detailed description thereof will be omitted, as appropriate. Moreover, the elements included in the present disclosure may be realized by forming two or more elements out of the same member so that one member functions as two or more elements or by allocating the functions of one member to two or more members.

An aspect of the present disclosure may be specified by configurations and features below.

A battery pack according to an aspect of the present disclosure includes all the following features (a) to (g).
(a) The battery pack includes:
   a core pack including a plurality of battery blocks coupled linearly to one another;
   an outer casing accommodating the core pack therein; and
   a securing part coupling the outer casing to the core pack.
(b) The outer casing includes:
   an outer tubular part accommodating the core pack therein;
   a first lid covering a first end of the outer tubular part; and
   a second lid covering a second end of the outer tubular part.
(c) The securing part includes:
   a coupling shaft coupling the plurality of battery blocks to one another in a longitudinal direction;
   a coupling nut coupled to an end of the coupling shaft; and
   a setscrew passing through the first lid of the outer casing and coupled to the coupling nut.
(d) The coupling shaft includes a threaded portion inserted into the plurality of battery blocks.
(e) The coupling nut includes:
   a first threaded hole provided in one end of the coupling nut, the threaded portion of the coupling shaft being screwed in the first threaded hole; and
   a second threaded hole provided in another end of the coupling nut, the setscrew being screwed in the second threaded hole.
(f) The core pack secures the plurality of battery blocks with the coupling nut and the coupling shaft screwed in the first threaded hole of the coupling nut clamping the plurality of battery blocks between the coupling nut and the coupling shaft such that the plurality of battery blocks are stacked on one another.
(g) The setscrew passes through the first lid and is screwed in the second threaded hole of the coupling nut to secure the first lid of the outer casing to the core pack.

This battery pack has the advantage of ensuring high resistance to vibration and drop impact by rigidly coupling the core pack to the first lid of the outer casing. This is because, in this battery pack, the coupling shaft is inserted into the core pack including the battery blocks stacked on one another, and is screwed in the first threaded hole of the coupling nut located at an end of the core pack, so as to secure the battery blocks by the coupling nut and the coupling shaft such that the plurality of battery blocks are stacked on one another. Furthermore, the setscrew passing through the first lid is screwed in the second threaded hole of the coupling nut in which the coupling shaft coupled to the core pack is screwed, thereby coupling the first lid to the core pack.

In this battery pack, the coupling shaft secures the battery blocks via the coupling nut such that the plurality of battery blocks are stacked on one another. Furthermore, the setscrew passes through the first lid and secures this core pack to the outer casing. In the battery pack having this structure, the first lid and the core pack made up of the plurality of battery blocks can be integrally coupled and secured by the coupling shaft, the coupling nut, and the setscrew. In other words, the coupling shaft is fastened to the coupling nut to couple and secure the battery blocks such that the plurality of battery blocks are stacked on one another, and the setscrew is fastened to the coupling nut to secure the first lid to the core pack, allowing the core pack to be secure to the first lid with high coupling strength. The coupling nut couples and secures the coupling shaft to the setscrew.

A battery pack according to another aspect of the present disclosure, may further includes a first waterproof gasket provided between an inner surface of the first lid and an end surface of the coupling nut. The first threaded hole and the second threaded hole may not communicating with each other in the coupling nut. The setscrew may be screwed in the second threaded hole such that the first waterproof gasket may be clamped between the inner surface of the first lid and the end surface of the coupling nut to allow the setscrew to pass through the first lid with a waterproof structure.

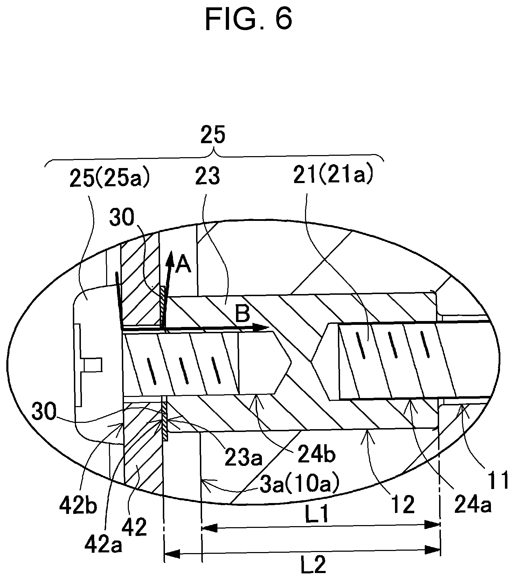

This battery pack is advantageous in that the setscrew can be coupled to the coupling nut by passing through the first lid with the waterproof structure with a simple structure. This is because the setscrew passing through the first lid and screwed in the second threaded hole of the coupling nut clamps the waterproof gasket between the inner surface of the first lid and the end surface of the coupling nut, thereby preventing water ingress beyond the first lid. For example, as illustrated in the enlarged cross-sectional view of FIG. 6, first threaded hole 24a and second threaded hole 24b disposed at the opposite ends of coupling nut 23 do not communicate with each other, and prevent water ingress along setscrew 25 indicated by arrow B, and thus, preventing water ingress in the direction indicated by arrow A with a simple structure in which waterproof gasket 30 provides a watertight seal between end surface 23a of coupling nut 23 and inner surface 42a of first lid 42. The interface between inner surface 42a of first lid 42 and end surface 23a of coupling nut 23 may be reliably watertight by clamping waterproof gasket 30 with a ring chape between inner surface 42a of first lid 42 and end surface 23a of coupling nut 23. Particularly, this structure has the advantage of a more reliable watertight seal since setscrew 25 is screwed in second threaded hole 24b of coupling nut 23, and inner surface 42a of first lid 42 is pressed against end surface 23a of coupling nut 23, allowing waterproof gasket 30 to be clamped between inner surface 42a of first lid 42 and end surface 23a of coupling nut 23.

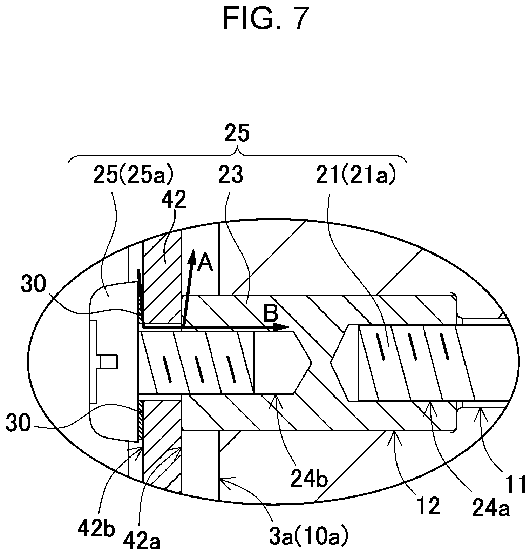

A battery pack according to still another aspect of the present disclosure may further include a second waterproof gasket provided between a head of the setscrew and an outer surface of the first lid. The setscrew may be screwed in the second threaded hole such that the second waterproof gasket may be clamped between the head of the setscrew and the outer surface of the first lid to allow the setscrew to pass through the first lid with a waterproof structure. This battery pack advantageously provides a watertight seal for the setscrew passing through the first lid with a simple structure. This is because, as illustrated in, e.g., the enlarged cross-sectional view of FIG. 7, water ingress in the directions indicated by arrow A and arrow B can be inhibited by waterproof gasket 30 disposed between head 25a of setscrew 25 and outer surface 42b of first lid 42.

In a battery pack according to still another aspect of the present disclosure, the core pack may have a nut recess provided in an end surface of the core pack, the nut recess guiding the coupling nut non-rotatably into the nut recess. The coupling shaft may be screwed in the first threaded hole of the coupling nut guided into the nut recess to secure the plurality of battery blocks such that the plurality of battery blocks are stacked on one another. This battery pack advantageously reliably secures the battery blocks such that the plurality of battery blocks are stacked on one another by rotating the coupling shaft and reliably screwing the coupling shaft into the first threaded hole of the coupling nut because the coupling nut remain rotationally fixed when being coupled to the core pack. Furthermore, this battery pack is advantageous in that the first lid can be secured to the core pack by rotating the setscrew and reliably screwing the setscrew in the second threaded hole of the coupling nut. Moreover, since the setscrew is secured to the metallic coupling nut instead of being directly secured to a resin part of the core pack and the nut recess is formed in the end surface of the core pack to non-rotatably guide the coupling nut, this battery pack advantageously provides the battery pack with high resistance to vibration and drop impact without threaded engagement portions becoming loose when the battery pack is subject to vibration or without the plastic in the threaded engagement portions being damaged due to crack propagation when the battery pack is dropped.

In a battery pack according to still another aspect of the present disclosure, the coupling nut may have a non-circular outer circumference. The nut recess may have an inner shape non-rotatably guiding the coupling nut having the non-circular outer circumference. This battery pack advantageously reliably secures the battery blocks such that the plurality of battery blocks are stacked on one another by rotating the coupling shaft and reliably screwing the coupling shaft in the first threaded hole of the coupling nut because the coupling nut can remain rotationally fixed when being coupled to the core pack. Furthermore, this battery pack is advantageous in that the first lid can be secured to the core pack by rotating the setscrew and reliably screwing the setscrew into the second threaded hole of the coupling nut. Moreover, the setscrew is secured to the metallic coupling nut instead of being directly secured to a resin part of the core pack and the nut recess is formed in the end surface of the core pack to non-rotatably guide the coupling nut. Therefore, this battery pack has the advantage of enabling high resistance to vibration and drop impact without threaded engagement portions becoming loose when the battery pack is subject to vibration or without the plastic in the threaded engagement portions being damaged due to crack propagation when the battery pack is dropped.

In a battery pack according to still another aspect of the present disclosure, the coupling shaft may include a head contacting an end surface of the core pack to clamp the core pack. This battery pack advantageously allows the battery blocks to be reliably secured in the stacked state by clamping the core pack between the coupling nut and the head of the coupling shaft screwed in the coupling nut. This battery pack advantageously allows the battery blocks to be reliably secured in the stacked state by inserting the coupling shaft into the stacked battery blocks, screwing the coupling shaft into the first threaded hole of the coupling nut, and clamping the core pack between the coupling nut and the head of the coupling shaft.

A battery pack according to still another aspect of the present disclosure may further include a spacer provided between an end of the core pack and a head of the coupling shaft. The head of the coupling shaft may be pressed against an end surface of the core pack via the spacer to secure the plurality of battery blocks such that the plurality of battery blocks are stacked on one another. This battery pack has the advantage of allowing the battery blocks to be secured in the stacked state while creating an accommodation space at the end of the core pack for, e.g., a circuit board and a because the coupling shaft screwed into the coupling nut clamps the core pack via the spacer to secure the plurality of battery blocks in the stacked state.

### Battery Pack 100

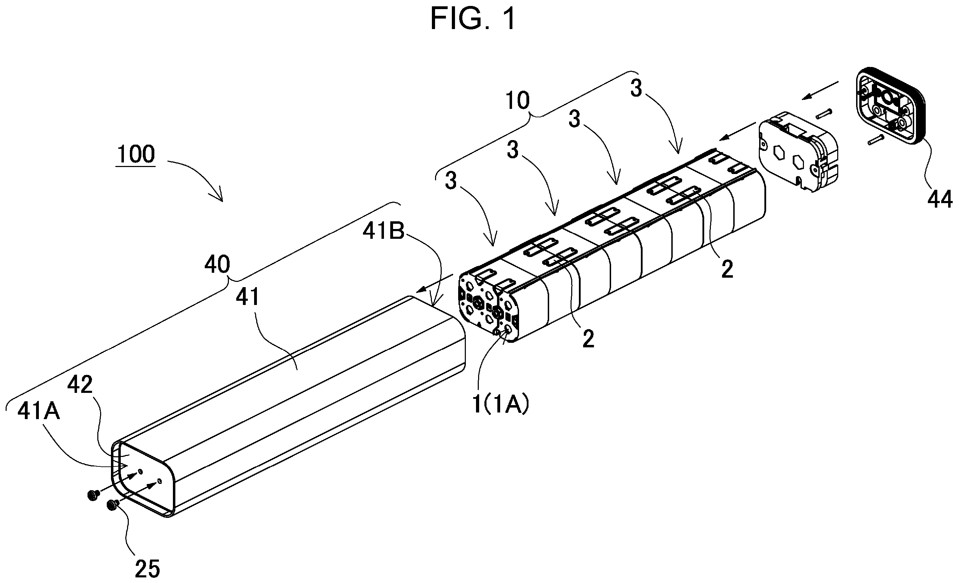

FIGS. 1 to 6 illustrate battery pack 100 according to an exemplary embodiment of the present disclosure. In battery pack 100 illustrated in these figures, battery core pack 10 including battery blocks 3 stacked on one another is accommodated in outer casing 40. In battery core pack 10, battery blocks 3 are stacked in a longitudinal direction, which is the longitudinal direction of battery cell 1, and coupled linearly to one another. Outer casing 40 is coupled to core pack 10 with securing part 20.

Battery pack 100 according to the present disclosure is mounted on, e.g., an electric powered vehicle, and supplies electric power to a drive motor. Battery pack 100 may be used, for example, as a power supply for an electric bicycle, a power-assisted bicycle, an electric wheelchair, an electric tricycle, or an electric cart. Note that the present disclosure is not intended to limit the application of battery pack 100; for example, battery pack 100 can be used as a power supply for various outdoor electrical devices, such as electric tools.

### Battery Block 3

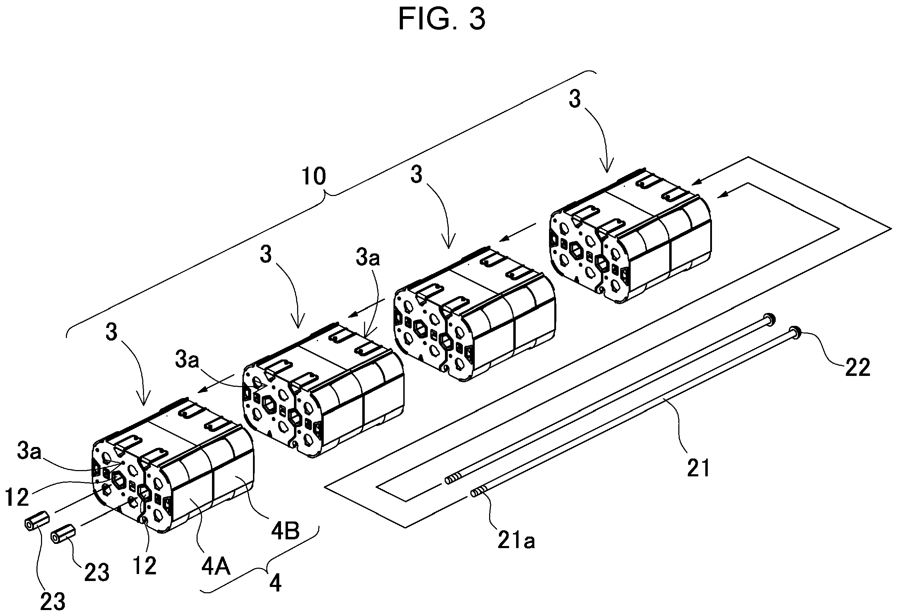

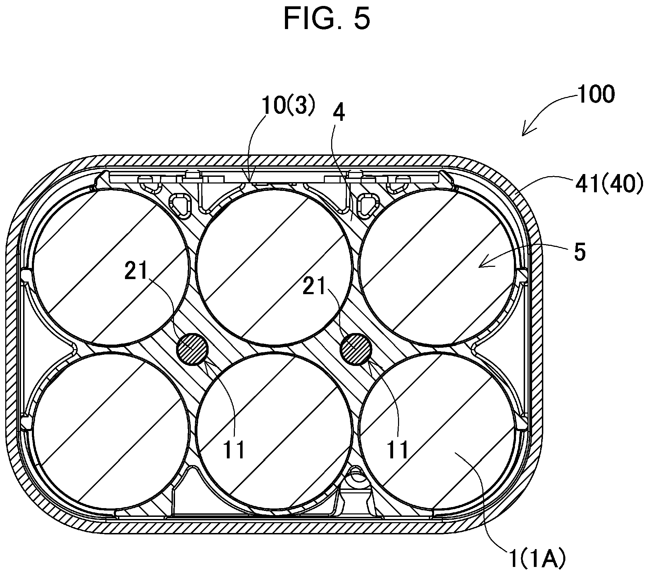

Battery block 3 includes rechargeable battery cells 1, cylindrical batteries 1A, arranged in parallel to one another, as illustrated in the perspective view of FIG. 3. In battery block 3 including cylindrical batteries 1A in this figure, through-hole 11 into which coupling shaft 21 is inserted is provided between battery cells 1 arranged in a multi-stage and multi-column parallel configuration. Battery cells 1 are rechargeable secondary batteries; lithium-ion secondary batteries can be used as battery cells 1. In the present disclosure, battery cells 1 are not limited to lithium-ion batteries; any other rechargeable secondary batteries may be used, including currently available batteries such as lithium polymer secondary batteries, as well as yet-to-be-developed all-solid-state batteries. Furthermore, in the case that battery cells 1 are cylindrical batteries 1A in battery pack 100 illustrated in FIGS. 3 and 5, batteries other than cylindrical batteries 1A, for example, prismatic batteries, may be used as battery cells 1.

In battery block 3, battery cells 1 are arranged in parallel to one another such that longitudinal directions of the cells extend in the same direction. Battery cells 1 are connected in series or parallel to one another with a lead plate in battery block 3. In battery block 3, battery cells 1 are connected in parallel to form separable parallel units. The parallel units are connected in series to each other, and provides battery block 3 with a high output voltage.

Battery block 3 includes battery holder 4 arranging battery cells 1 at fixed positions. Battery holder 4 arranges battery cells 1 of battery block 3 at fixed positions. Battery holder 4 is molded from a highly insulating material, preferably, a thermoplastic resin. Battery holder 4 holds the battery cells 1 in place such that battery cells 1 are oriented in parallel to one another and the end surfaces of battery cells 1 are aligned on the same plane.

Battery holder 4 has cell-holding openings 5 therein that receive and retain battery cells 1 therein, respectively. Each cell-holding opening 5 has an inner shape substantially conforming to an entire peripheral surface of battery cell 1. With battery cells 1 disposed in cell-holding openings 5, battery holder 4 retains battery cells 1 at predetermined positions.

Battery holder 4 illustrated in FIG. 3 is divisible at the middle of battery cells 1 into two parts, namely, a pair of cell holders 4A and 4B. The pair of cell holders 4A and 4B divide cell-holding openings 5 in half at the center of each battery cell 1. Two separate cell holders 4A and 4B are coupled via battery cells 1 with opposite ends disposed in cell-holding openings 5, thereby preventing the relative positions of cell holders 4A and 4B from shifting.

Battery holder 4 has through-hole 11 provided therein. Coupling shaft 21 is inserted in through-hole 11. Through-hole 11 is provided in a center portion of battery holder 4 between cell-holding openings 5. In battery holder 4, through-hole 11 may be positioned to effectively utilize the space between cell-holding openings 5. As illustrated in FIG. 5, battery holder 4 can utilize the interstitial space between adjacent cylindrical batteries 1A, to define through-hole 11 in the center portion thereof. Single through-hole 11 or plural through-holes 11 may be formed. Through-holes 11 shown in FIG. 5 are located in two central places of battery holder 4 with spacing between the through-holes, efficiently enhancing the fastening strength of core pack 10. Battery holder 4 of battery block 3 has through-hole 11 passing through from one end surface 3a to the other end surface of battery holder 4. Nut recess 12 communicating with through-hole 11 may be provided in one end surface 3a. A recess accommodating head 22 of coupling shaft 21 therein may be formed in end surface 3a opposite to the end surface having nut recess 12 provided therein. The shape and component of battery holder 4 may be standardized; when battery blocks 3 are aligned and stacked, linear through-hole 11 is formed through stacked battery blocks 3, and coupling shaft 21 may be inserted in through-hole 11 and fastened to coupling nut 23.

The pair of separably molded cell holders 4A and 4B may be aligned and coupled to each other with a locking mechanism, allowing through-holes 11 of stacked battery blocks 3 to form a linear passage. The two separate cell holders may be alternatively coupled by, e.g., a coupling mechanism other than the locking mechanism. The cell holders may be screwed or bonded together.

Although above battery holder 4 is molded from plastic to be divisible at the middle of battery cells 1 into two parts, battery holder 4 in battery pack 100 according to the present disclosure is not limited to the above structure. Battery holder 4 may have any structure capable of retaining battery cells 1 at predetermined positions. For example, battery holder 4 may alternatively have an integrated structure without divided parts, or may alternatively be divided into three or more parts, or may alternatively be divided at a different position, or may alternatively be covered by a lid.

Mating surfaces of battery holders 4 that are opposite to each other when stacked may have a fitting structure to couple stacked battery blocks 3 to each other such that the relative positions thereof cannot be shifted. Battery block 3 with the fitting structure includes a fitting projection on one end surface 3a and a fitting recess in the other end surface 3a. The fitting projection is guided into the fitting recess, battery blocks 3 may be aligned and stacked on one another.

### Core Pack 10

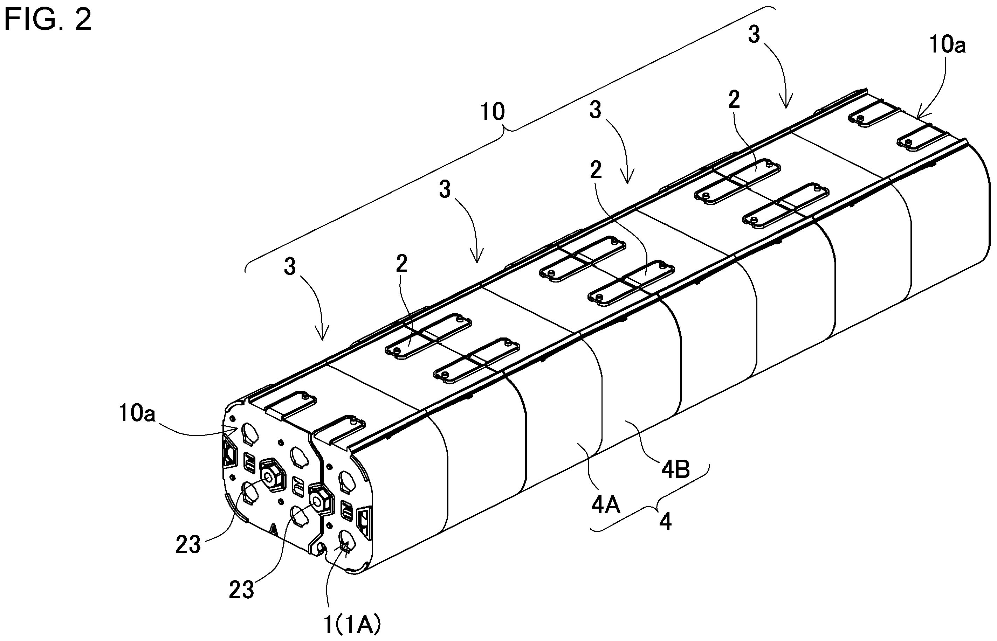

Core pack 10 includes battery blocks stacked linearly on one another. In core pack 10 illustrated in FIG. 2, battery blocks 3 are secured in a stacked state by securing part 20 to form a straight, elongated structure. Core pack 10 includes battery blocks 3 stacked linearly on one another such that the longitudinal directions of battery cells 1 become parallel to one another. In core pack 10, battery blocks 3 are secured by securing part 20. Securing part 20 secures battery blocks 3 in the stacked state by coupling shaft 21 inserted into stacked battery blocks 3 and screwed in coupling nut 23 so that battery blocks 3 are clamped between coupling nut 23 and head 22 of coupling shaft 21. In core pack 10 illustrated in FIG. 5, two columns of through-holes 11 are disposed in each battery block 3, and battery blocks 3 are secured in a stacked state by two coupling shafts 21. The adjacent battery blocks 3 secured in the stacked state are connected in series or parallel to each other with a lead plate.

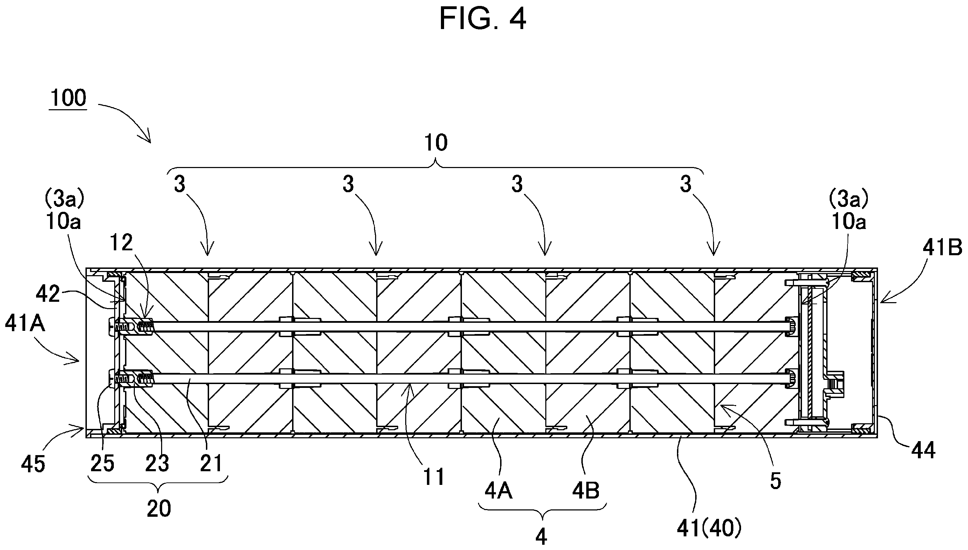

Core pack 10 has through-hole 11 provided therein. Coupling shaft 21 is inserted into through-hole 11. Through-hole 11 extends in the longitudinal direction of core pack 10 in which the battery blocks are linearly stacked on one another parallel to battery cells 1. Through-hole 11 illustrated in FIG. 4 extends parallel to battery cells 1, and is disposed in battery holder 4 between battery cells 1. Through-hole 11 communicates with nut recess 12 into which coupling nut 23 is inserted. Through-hole 11 and nut recess 12 extend linearly in the longitudinal direction of core pack 10. Coupling shaft 21 inserted into through-hole 11 is fastened to coupling nut 23 inserted into nut recess 12, thereby securing battery blocks 3 in a stacked state.

Core pack 10 has nut recess 12 in in one end surface 10a of the core pack. Coupling nut 23 is inserted into nut recess 12. Nut recess 12 preferably has a shape guiding and receiving coupling nut 23 non-rotationally. For example, nut recess 12 into which coupling nut 23 having a hexagonal outer shape is inserted is configured to have a hexagonal inner shape so that coupling nut 23 can be inserted into nut recess 12 non-rotationally. Nut recess 12 guiding coupling nut 23 non-rotationally allows coupling shaft 21 and setscrew 25 to be easily and reliably screwed in coupling nut 23. This is because coupling nut 23 is prevented from rotating together with coupling shaft 21, setscrew 25 during threaded engagement of coupling shaft 21, setscrew 25 into coupling nut 23. The structure for non-rotatably guiding coupling nut 23 into nut recess 12 is realized by coupling nut 23 having a non-cylindrical outer shape, and guiding non-cylindrical coupling nut 23 into the fitting structure of nut recess 12.

Coupling shaft 21 and setscrew 25 are reliably screwed into nut recess 12, which non-rotatably guides coupling nut 23, but nut recess 12 does not necessarily need to non-rotatably guide coupling nut 23. This is because coupling nut 23 can be grasped to restrict rotation thereof during screwing coupling shaft 21 to coupling nut 23. Furthermore, when setscrew 25 or coupling shaft 21 is screwed into coupling nut 23, coupling nut 23 is pressed against the inner surface of nut recess 12 by coupling shaft 21 or setscrew 25 to restrict rotation of coupling nut 23 due to frictional resistance.

Battery block 3 illustrated in FIG. 6 has a structure in which the length (L1) of nut recess 12 is less than the length (L2) of coupling nut 23 (nut recess 12 is narrow) such that end surface 23a of coupling nut 23 inserted in nut recess 12 projects beyond end surface 3a of battery block 3 (end surface 10a of core pack 10). This structure is advantageous in that upon setscrew 25 being screwed in coupling nut 23, waterproof gasket 30 is clamped between end surface 23a of coupling nut 23 and inner surface 42a of first lid 42, thereby ensuring a reliable watertight seal. The waterproof structure of setscrew 25 and first lid 42 may alternatively be provided such that waterproof gasket 30 is clamped between head 25a of setscrew 25 and outer surface 42b of first lid 42 as illustrated in FIG. 7. This structure allows end surface 23a of coupling nut 23 to be flush with end surface 3a of battery block 3 or allows end surface 3a of battery block 3 to project beyond end surface 23a of coupling nut 23.

In battery core pack 10 illustrated in FIGS. 2 and 3, four battery blocks 3 are stacked linearly on one another such that the longitudinal directions of battery cells 1 are the same direction. Stacked battery blocks 3 may be connected in series or parallel to one another by lead plates connected to surface electrodes 2 exposed on the surface of core pack 10. In the case that battery blocks 3 are secured in the stacked state by coupling shaft 21 screwed in coupling nut 23, the lead plates may be connected to surface electrodes 2 of adjacent battery blocks 3 by, e.g., soldering, laser welding, or spot welding. The lead plates connected to surface electrodes 2 also couple stacked battery blocks 3 at fixed positions.

While four battery blocks 3 are linearly coupled in battery core pack 10 illustrated in FIGS. 2 and 3, the total number of battery blocks 3 of battery core pack 10 according to the present disclosure is not limited to four. Battery core pack 10 may include five or more battery blocks 3 or may include three or fewer battery blocks 3 although not illustrated in the drawings. In this core pack 10, battery blocks 3 can also be connected in series or parallel to one another by the lead plates connected to surface electrodes 2 on adjacent battery blocks 3.

### Outer Casing 40

Outer casing 40 includes: outer tubular part 41 accommodating core pack 10 therein; first lid 42 covering first end 41A of outer tubular part 41; and second lid 44 covering second end 41B of outer tubular part 41. Outer casing 40 is preferably made of metal, such as aluminum. Metallic outer casing 40 is advantageous as it has high strength and superior thermal dissipation properties. Outer casing 40 is not necessarily made of metal, and may be molded and formed, for example, from polycarbonate, which has sufficient strength.

The inner profile of outer tubular part 41 is slightly larger than the outer profile of core pack 10 such that core pack 10 can be smoothly inserted into outer tubular part 41. Outer tubular part 41 is molded to have an inner profile such that the outer surface of core pack 10 received therein makes surface-to-surface contact with the inner surface of outer tubular part 41. Outer tubular part 41 is advantageous in that core pack 10 can be disposed therein at a fixed position to reduce vibration and displacement and enhance the impact resistance and furthermore, heat generated by core pack 10 can be efficiently dissipated preferably to outside due to thermal coupling between outer tubular part 41 and core pack 10.

In outer casing 40 illustrated in the cross-sectional view of FIG. 4, outer tubular part 41 has first end 41A covered by first lid 42 and second end 41B covered by second lid 44. Projecting portion 45 extending from a surface of first lid 42 can be disposed at first end 41A to enhance the resistance to drop impact in the event of a drop where first lid 42 faces downward. Projecting portion 45 prevents damage to setscrew 25 from ground contact and absorb impact in the event of a drop.

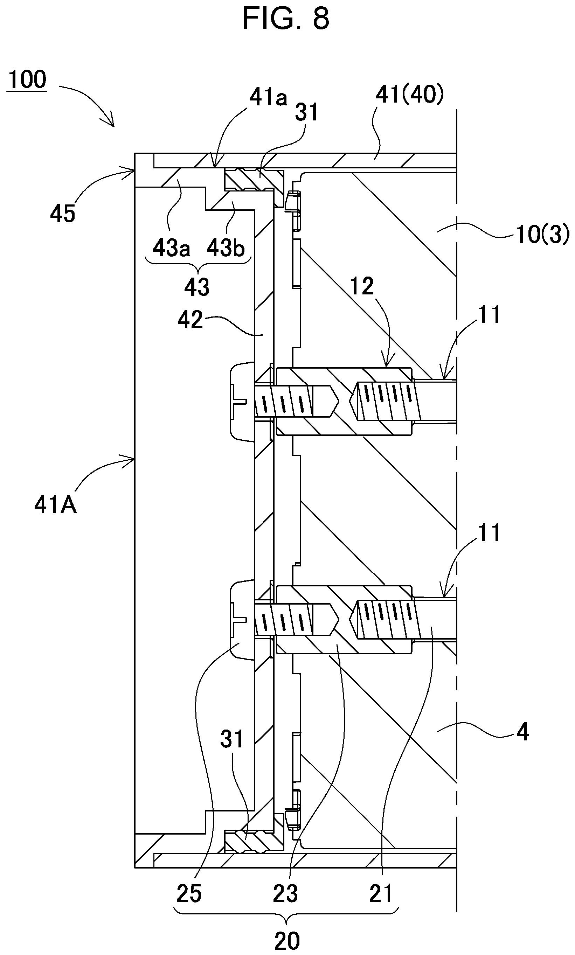

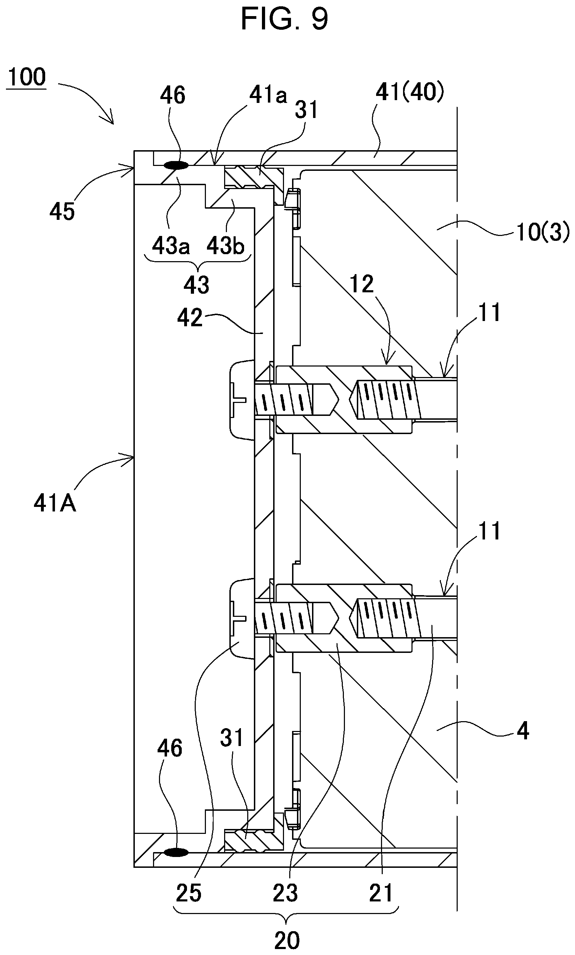

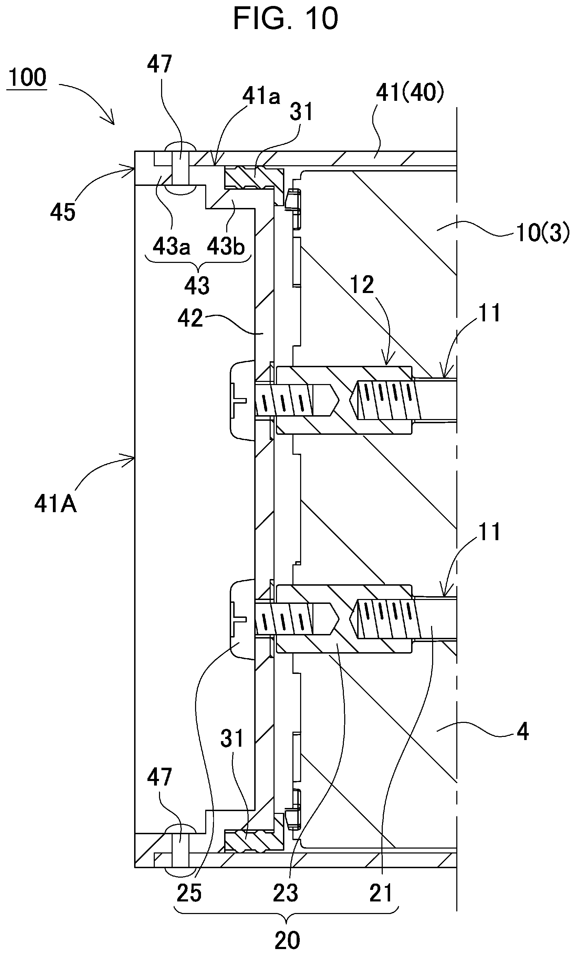

The present disclosure is not limited to a battery pack with outer casing 40 having a waterproof structure; however, battery pack 100 with outer casing 40 having a waterproof structure is advantageous as it can be safely used for applications such as devices intended for outdoor use, for example, electric scooters and bicycles. In the present disclosure, the waterproof structure is not limited; for example, in battery pack 100 with outer casing 40 having a waterproof structure, first lid 42 and second lid 44 are coupled to outer tubular part 41 by the waterproof structure. FIGS. 8 to 10 illustrate partially enlarged cross-sectional views of outer tubular part 41 and first lid 42 coupled by the waterproof structure. First lid 42 illustrated in FIG. 8 includes coupling tube 43 provided at an outer peripheral edge of first lid 42. Coupling tube 43 is inserted into inner surface 41a of outer tubular part 41. First lid 42 having this shape may be formed by, e.g., stamping or spinning a single metallic sheet made of, e.g., aluminum. Coupling tube 43 includes: press-in tube 43a closely contacting inner surface 41a of outer tubular part 41; and pressure tube 43b pressing waterproof ring 31 against inner surface 41a of outer tubular part 41 to form a waterproof structure. Press-in tube 43a is a tubular portion having an outer shape such that when pressed into outer tubular part 41, press-in tube 43a closely contacts inner surface 41a of outer tubular part 41 without gaps, and pressure tube 43b is a tubular portion having an outer shape such that when waterproof ring 31 is clamped and pressed between inner surface 41a of outer tubular part 41 and pressure tube 43b, pressure tube 43b provides a watertight seal between outer tubular part 41 and pressure tube 43b. First lid 42 illustrated in FIG. 8 is pressed into first end 41A of outer tubular part 41 with waterproof ring 31 clamped between first lid 42 and first end 41A of outer tubular part 41 to cover first end 41A of outer tubular part 41 as a waterproof structure. Coupling tube 43 of first lid 42 may be pressed in outer tubular part 41 and secured, as illustrated in FIG. 8. In coupling tube 43 having this structure, the outer profile of press-in tube 43a is slightly larger than the inner profile of outer tubular part 41 and the outer surface of press-in tube 43a in a press-in state holds inner surface 41a of outer tubular part 41 in a pressed state. First lid 42 is thus reliably coupled to outer tubular part 41. Furthermore, first lid 42 is reliably secure to outer tubular part 41 when press-in tube 43a and outer tubular part 41 are secured by spot welding 46, as illustrated in FIG. 9, or when press-in tube 43a and outer tubular part 41 are secured by rivet 47, as illustrated in FIG. 10.

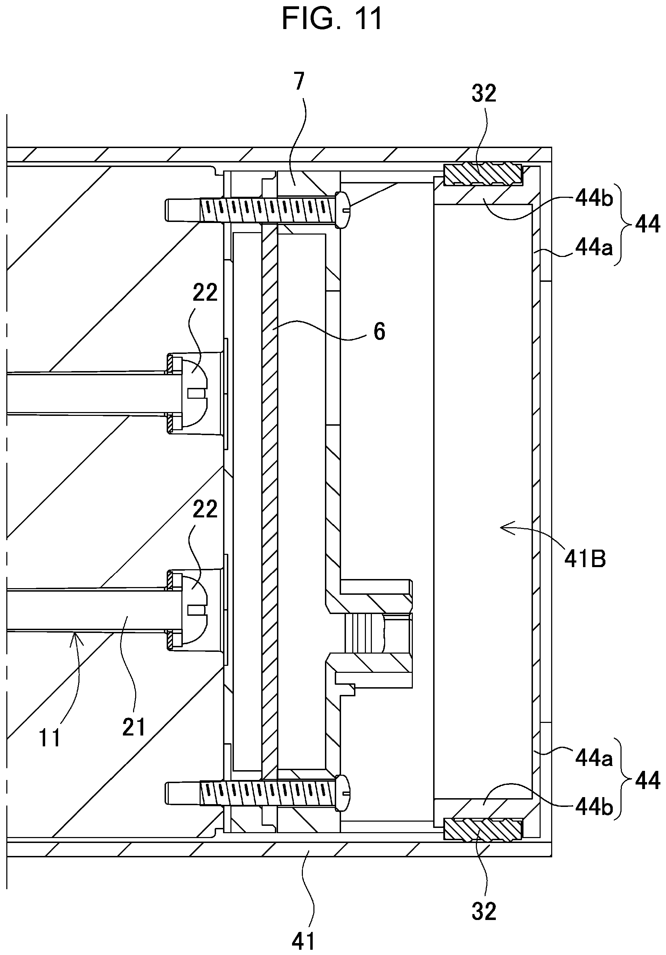

Second lid 44 is molded such that circumferential wall 44b has a ring shape along the outer circumference of flat plate 44a to form an integrated structure of flat plate 44a and circumferential wall 44b, as illustrated in the cross-sectional view of FIG. 11. Board holder 7 accommodating circuit board 6 in an internal space formed at the second end 41B of outer tubular part 41 between second lid 44 and core pack 10 is secured to core pack 10 with screws. Second lid 44 is preferably made of the same material as the material of outer tubular part 41 and first lid 42. Therefore, in outer casing 40 including outer tubular part 41 and first lid 42 made of aluminum, second lid 44 is also made of aluminum. The material of second lid 44 is not necessarily the same as that of outer tubular part 41; for example, second lid 44 may be made of plastic while outer tubular part 41 is made of aluminum.

Second lid 44 covers second end 41B of outer tubular part 41 with the waterproof structure. Second lid 44 illustrated in the cross-sectional view of FIG. 11 covers second end 41B of outer tubular part 41 via waterproof ring 32 to form the waterproof structure. In second lid 44 shown in the figure, circumferential wall 44b projecting parallel to the inner peripheral surface of outer tubular part 41 is integrally formed with outer tubular part 41. Being clamped between circumferential wall 44b and the inner peripheral surface of second end 41B of outer tubular part 41, waterproof ring 32 covers of second lid 44 with the waterproof structure. Waterproof ring 32 may be an elastomeric member with a shape conforming to the inner circumferential surface and circumferential wall 44b which are located on the opposite sides when clamped. Waterproof ring 32 may include two or more ridges on the outer peripheral surface, and waterproof ring 32 with the ridges can ensure a more reliable watertight seal by guiding the ridges into ring grooves formed in the inner surface of second end 41B of outer tubular part 41. Second lid 44 may include a step portion , on the outer peripherical surface of circumferential wall 44b. The step portion guides waterproof ring 32, and circumferential wall 44b of second lid 44 can be pressed into waterproof ring 32 on the inner peripheral surface of second end 41B, to cover second end 41B to form the waterproof structure.

### Securing Part 20

Securing part 20 includes: coupling shaft 21 that couples battery blocks 3 stacked on one another in the longitudinal direction; coupling nut 23 coupled to an end of coupling shaft 21; and setscrew 25 coupled to the coupling nut. In securing part 20 illustrated in FIG. 4, coupling shaft 21, coupling nut 23, and setscrew 25 are linearly arranged, and setscrew 25 is disposed on a line extending from coupling shaft 21 and coupling nut 23. Coupling shaft 21 is inserted into through-hole 11 and fastened to coupling nut 23, thereby securing battery blocks 3 in the longitudinal direction. Setscrew 25 passes through first lid 42 and is fastened to coupling nut 23, thereby securing first lid 42 to core pack 10 accommodating therein battery blocks 3 such that the plurality of battery blocks are stacked on one another.

### Coupling Shaft 21

Coupling shaft 21 includes threaded portion 21a at a leading end of the coupling shaft. Threaded portion 21a is inserted into through-hole 11. Threaded portion 21a may be any element that can be screwed in and fastened to second threaded hole 24b of coupling nut 23, and a shaft including threaded portion 21a at a leading end, for example, a half-threaded screw, a full-threaded screw, or a threaded rod, can be used as coupling shaft 21. When measured from the insertion opening of one end surface of core pack 10, coupling shaft 21 has a length sufficient to fasten coupling nut 23 located at the other end surface of core pack 10. Coupling shaft 21 is inserted into stacked battery blocks 3. Threaded portion 21a at the leading end is screwed in coupling nut 23, thus securing battery blocks 3 such that the plurality of battery blocks are stacked on one another. Coupling shaft 21 screwed in coupling nut 23 allows the opposite ends of core pack 10 to be clamped between coupling nut 23 and head 22 of coupling shaft 21, and secures stacked battery blocks 3 to form core pack 10. Coupling shaft 21 includes head 22 having a non-circular outer profile, such as a hexagon, or a Phillips or slotted groove is formed in head 22, so as to allow coupling shaft 21 to rotate for screwing in coupling nut 23. Head 22 includes not only a screw head integrally formed with a shaft portion, but also a nut screwed into a threaded shaft portion.

### Coupling Nut 23

Coupling nut 23 includes first threaded hole 24a in one end of the coupling nut and, second threaded hole 24b in another end of the coupling nut. Threaded portion 21a of coupling shaft 21 is screwed in first threaded hole 24a. Setscrew 25 is screwed in second threaded hole 24b. In coupling nut 23 illustrated in FIG. 6, first threaded hole 24a and second threaded hole 24b are arranged so as not to communicate with each other. Coupling nut 23 can be manufactured by forming a female threaded hole in one end surface 23a (end surface 23a on the right side in FIG. 6) as first threaded hole 24a, and forming a female threaded hole in another end surface 23a (end surface 23a on the left side in FIG. 6) as second threaded hole 24b so as not to extend to first threaded hole 24a. Coupling nut 23 with first threaded hole 24a and second threaded hole 24b not communicating with each other is advantageous in that first threaded hole 24a and second threaded hole 24b can be easily and reliably watertight, and water flowing in along setscrew 25 (first threaded hole 24a) securing first lid 42 as indicated by arrow B in FIG. 6 can be prevented from entering second threaded hole 24b, enabling a simplified waterproof structure.

In battery pack 100, the waterproof structure of outer casing 40 can be realized using coupling nut 23 with first threaded hole 24a and second threaded hole 24b communicating with each other; therefore, coupling nut 23 may have a structure in which first threaded hole 24a and second threaded hole 24b communicate with each other.

Coupling nut 23 is fastened to coupling shaft 21 and fastened between first lid 42 of outer casing 40 and core pack 10 by a single or common member, and couples coupling shaft 21 and setscrew 25 each screwed in and fastened to coupling nut 23. Coupling nut 23 serves as a nut for securing battery blocks 3 such that the plurality of battery blocks are stacked on one another to form core pack 10 and also serves as a nut for securing first lid 42 to core pack 10. Coupling nut 23 into which both coupling shaft 21 and setscrew 25 are screwed and fastened does not require separate members (such as nuts) to fasten coupling shaft 21 and setscrew 25, and does not need to further fasten elements fastened by the separate nuts, reducing components, manufacturing steps, and/or simplifying processes and lowering costs.

In coupling nut 23, first threaded hole 24a and second threaded hole 24b are linearly arranged, increasing the coupling strength to core pack 10 and outer casing 40. Coupling shaft 21 and setscrew 25 can be linearly coupled to each other via coupling nut 23. Coupling nut 23 and coupling shaft 21 can be linearly fastened to each other, and first lid 42 and core pack 10 can be linearly fastened to each other via setscrew 25. The respective directions in which coupling shaft 21 and setscrew 25 are fastened to coupling nut 23 are linear (opposite directions), the fastening strength can be translated into the coupling strength without loss. The strength of battery pack 100 can be enhanced, for example, over the case where screws in different directions are fastened by separate nuts, followed by further fastening, for example, the case where the outer casing and the core pack are fastened by setscrews in a direction perpendicular to the coupling shaft. Furthermore, coupling nut 23 can be fastened to coupling shaft 21 to form core pack 10 and moreover, in securing first lid 42 to core pack 10, enables reliable fastening by setscrew 25, allowing battery pack 100 to have high resistance to vibration and drop impact. When battery cells 1 are rigidly coupled in the stacked state and first lid 42 of outer casing 40 is rigidly coupled to core pack 10, battery pack 100 has high resistance to vibration and drop impact. Since coupling shaft 21, coupling nut 23, and setscrew 25 are all made of metal, they can be coupled and secured to one another with sufficient strength by screwing fastening. When coupling shaft 21 is fastened to coupling nut 23, battery blocks 3 can be rigidly coupled and secured to be stacked on one another to form core pack 10. Furthermore, when setscrew 25 passes through first lid 42 and is fastened to coupling nut 23, first lid 42 can be rigidly coupled and secured to core pack 10.

### Setscrew 25

Setscrew 25 passes through first lid 42 and is screwed in second threaded hole 24b of coupling nut 23, thereby securing first lid 42 to core pack 10. Coupling nut 23 illustrated in FIG. 4 couples coupling shaft 21 to setscrew 25. Battery pack 100 can more rigidly couple first lid 42 of outer casing 40 to core pack 10 than coupling shaft 21 and setscrew 25 are not coupled to each other (for example, FIG. 11). Core pack 10 and first lid 42 on an end surface of outer casing 40 are rigidly coupled to each other, and battery pack 100 has a high resistance to vibration and drop impact.

In core pack 10, battery blocks 3 stacked on one another by being clamped between coupling nut 23 at one end (end surface 10a) and coupling shaft 21 at another end (end surface 10a) screwed in first threaded hole 24a of coupling nut 23. Head 22 of coupling shaft 21 is directly or indirectly pressed against another end (end surface 10a) of core pack 10 to clamp core pack 10. Coupling shaft 21 illustrated in FIG. 11 includes head 22 contacting end surface 10a of core pack 10 to clamp core pack 10. As illustrated in FIG. 11, end surface 10a of core pack 10 may have a recess therein in which head 22 of coupling shaft 21 is to be positioned. Head 22 of coupling shaft 21 is pressed against end surface 10a of core pack 10 in the recess.

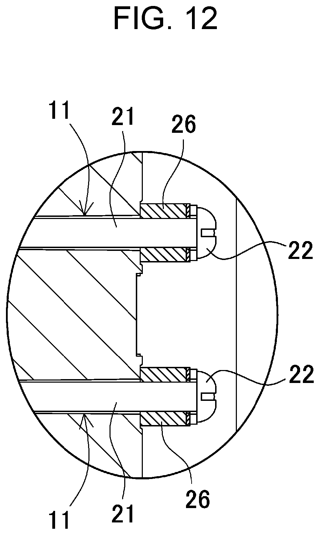

In battery pack 100 illustrated in FIG. 12, spacer 26 is disposed between end surface 10a of core pack 10 and head 22 of coupling shaft 21. In battery pack 100, head 22 of coupling shaft 21 screwed in coupling nut 23 can be pressed against end surface 10a of core pack 10 via spacer 26 to secure battery blocks 3 such that the plurality of battery blocks are stacked on one another, and the height of spacer 26 creates an accommodation space at the end of core pack 10, for example, for a accommodating, e.g., a circuit board or wiring therein.

Above battery pack 100 can be assembled in, e.g., the following steps.
(1) Battery blocks 3 are stacked on one another, and coupling shaft 21 is inserted into through-hole 11 of stacked battery blocks 3 (core pack 10).
(2) Coupling nut 23 is guided into nut recess 12 in end surface 3a of stacked battery blocks 3, and coupling shaft 21 is screwed in first threaded hole 24a of coupling nut 23 in nut recess 12, and thus coupling shaft 21 and coupling nut 23 secure battery blocks 3 in the stacked state. In this state, core pack 10 is sandwiched between head 22 of coupling shaft 21 and coupling nut 23, and secured in the stacked state.
(3) Lead plates are electrically connected to surface electrodes 2 on adjacent battery blocks 3 by, e.g., soldering.
(4) Required components such as a circuit board are arranged at one end of core pack 10, specifically, at an end on which head 22 of coupling shaft 21 is exposed, and subsequently core pack 10 is inserted into outer tubular part 41 of outer casing 40.
(5) Setscrew 25 passing through first lid 42 is screwed in second threaded hole 24b of coupling nut 23 in end surface 10a of core pack 10 inserted into outer tubular part 41, and thus core pack 10 is secured to first lid 42. In battery pack 100 in which setscrew 25 passes through first lid 42 with a waterproof structure, setscrew 25 is screwed in coupling nut 23 with waterproof gasket 30 clamped between inner surface 42a of first lid 42 and end surface 23a of coupling nut 23, as illustrated in, e.g., FIG. 6. first lid 42 is thus coupled to core pack 10.
(6) In battery pack 100 in which outer casing 40 has a waterproof structure, first lid 42 is secured to first end 41A of outer tubular part 41 to cover first end 41A with the waterproof structure. Second lid 44 is secured to second end 41B of outer tubular part 41 to cover second end 41B with the waterproof structure.

Battery pack 100 may include a connector (not illustrated in the drawings) to output electric power to an external device or may communicate with a device in which battery pack 100 is installed. This connector can be secured, for example, to second lid 44 with a waterproof structure. Battery pack 100 in which a connector is secured to second lid 44 can be manufactured by connecting a connector to a circuit board via lead wires, core pack 10 to be inserted into outer tubular part 41, securing this connector to second lid 44, and covering second end 41B of outer tubular part 41 by second lid 44 with the connector secured thereto. In battery pack 100 according to the present disclosure, the structure, method, or the like for securing a connector is not limited; the structure, method, or the like for securing a connector may be an existing structure, method, or the like for battery packs.

### INDUSTRIAL APPLICABILITY

The present disclosure can be effectively used as a battery pack in which a core pack and an outer casing can be rigidly coupled with ease in a simplified manner to offer enhanced impact resistance.

### REFERENCE SIGNS LIST

- 100, 900: battery pack
- 1: battery cell
- 1A: cylindrical battery
- 2: surface electrode
- 3: battery block
- 3a: end surface (of battery block)
- 4: battery holder
- 4A, 4B: cell holder
- 5: cell-holding opening
- 6: circuit board
- 7: board holder
- 10: core pack
- 10a: end surface (of core pack)
- 11: through-hole
- 12: nut recess
- 20: securing part
- 21: coupling shaft
- 21a: threaded portion
- 22: head (of coupling shaft)
- 23: coupling nut
- 23a: end surface (of coupling nut)
- 24a: first threaded hole
- 24b: second threaded hole
- 25: setscrew
- 25a: head (of setscrew)
- 26: spacer
- 30: waterproof gasket
- 31, 32: waterproof ring
- 40: outer casing
- 41: outer tubular part
- 41a: inner surface (of outer tubular part)
- 41A: first end
- 41B: second end
- 42: first lid
- 42a: inner surface
- 42b: outer surface
- 43: coupling tube
- 43a: press-in tube
- 43b: pressure tube
- 44: second lid
- 44a: flat plate
- 44b: circumferential wall
- 45: projecting portion
- 46: spot welding
- 47: rivet
- 903: battery block
- 904: battery holder
- 910: core pack
- 921: coupling shaft
- 925: setscrew
- 940: outer casing
- 941: tubular part
- 942, 944: lid

## Claims

1. A battery pack comprising:
a core pack including a plurality of battery blocks coupled linearly to one another;
an outer casing accommodating the core pack therein; and
a securing part coupling the outer casing to the core pack, wherein
the outer casing includes:
an outer tubular part accommodating the core pack therein;
a first lid covering a first end of the outer tubular part; and
a second lid covering a second end of the outer tubular part,
the securing part includes:
a coupling shaft coupling the plurality of battery blocks to one another in a longitudinal direction;
a coupling nut coupled to an end of the coupling shaft; and
a setscrew passing through the first lid of the outer casing and coupled to the coupling nut,
the coupling shaft includes a threaded portion inserted into the plurality of battery blocks,
the coupling nut includes:
a first threaded hole provided in one end of the coupling nut, the threaded portion of the coupling shaft being screwed in the first threaded hole; and
a second threaded hole provided in another end of the coupling nut, the setscrew being screwed in the second threaded hole,
the core pack secures the plurality of battery blocks with the coupling nut and the coupling shaft screwed in the first threaded hole of the coupling nut clamping the plurality of battery blocks between the coupling nut and the coupling shaft such that the plurality of battery blocks are stacked on one another, and
the setscrew passes through the first lid and is screwed in the second threaded hole of the coupling nut to secure the first lid of the outer casing to the core pack.

2. The battery pack according to claim 1, further comprising
a first waterproof gasket provided between an inner surface of the first lid and an end surface of the coupling nut, wherein
the first threaded hole and the second threaded hole do not communicating with each other in the coupling nut, and
the setscrew is screwed in the second threaded hole such that the first waterproof gasket is clamped between the inner surface of the first lid and the end surface of the coupling nut to allow the setscrew to pass through the first lid with a waterproof structure.

3. The battery pack according to claim 1, further comprising
a second waterproof gasket provided between a head of the setscrew and an outer surface of the first lid, wherein
the setscrew is screwed in the second threaded hole such that the second waterproof gasket is clamped between the head of the setscrew and the outer surface of the first lid to allow the setscrew to pass through the first lid with a waterproof structure.

4. The battery pack according to claim 1, wherein
the core pack has a nut recess provided in an end surface of the core pack, the nut recess guiding the coupling nut non-rotatably into the nut recess, and
the coupling shaft is screwed in the first threaded hole of the coupling nut guided into the nut recess to secure the plurality of battery blocks such that the plurality of battery blocks are stacked on one another.

5. The battery pack according to claim 4, wherein
the coupling nut has a non-circular outer circumference, and
the nut recess has an inner shape non-rotatably guiding the coupling nut having the non-circular outer circumference.

6. The battery pack according to any one of claims 1 to 5, wherein the coupling shaft includes a head contacting an end surface of the core pack to clamp the core pack.

7. The battery pack according to claim 1, further comprising
a spacer provided between an end of the core pack and a head of the coupling shaft, wherein
the head of the coupling shaft is pressed against an end surface of the core pack via the spacer to secure the plurality of battery blocks such that the plurality of battery blocks are stacked on one another.

8. A battery pack comprising:
a core pack including a plurality of battery blocks coupled linearly to one another;
an outer casing accommodating the core pack therein; and
a securing part coupling the outer casing to the core pack, wherein
the outer casing includes:
an outer tubular part accommodating the core pack therein;
a first lid covering a first end of the outer tubular part; and
a second lid covering a second end of the outer tubular part,
the securing part includes:
a coupling shaft coupling the plurality of battery blocks to one another;
a coupling nut coupled to an end of the coupling shaft; and
a setscrew passing through the first lid of the outer casing and coupled to the coupling nut,
the coupling shaft includes a threaded portion inserted into the plurality of battery blocks,
the coupling nut includes a first threaded hole and a second threaded hole at opposite ends of the coupling nut, the threaded portion being screwed in the first threaded hole, the setscrew being screwed in the second threaded hole,
the core pack secures the plurality of battery blocks with the coupling nut and the coupling shaft screwed in the first threaded hole of the coupling nut clamping the plurality of battery blocks between the coupling nut and the coupling shaft such that the plurality of battery blocks are stacked on one another, and
the setscrew passes through the first lid and is screwed in the second threaded hole of the coupling nut to secure the first lid of the outer casing to the core pack.

9. The battery pack according to claim 8, further comprising
a first waterproof gasket provided between an inner surface of the first lid and an end surface of the coupling nut, wherein
the first threaded hole and the second threaded hole do not communicate with each other in the coupling nut.

10. The battery pack according to claim 9, wherein the setscrew is screwed in the second threaded hole such that the inner surface of the first lid and the end surface of the coupling nut clamp and secure the first waterproof gasket between the inner surface of the first lid and the end surface of the coupling nut.

11. The battery pack according to claim 8, further comprising
a second waterproof gasket provided between a head of the setscrew and an outer surface of the first lid.

12. The battery pack according to claim 8, wherein the core pack has a nut recess provided in an end surface of the core pack, the nut recess guiding the coupling nut non-rotatably into the nut recess.

13. The battery pack according to claim 12, wherein
the coupling nut has a non-circular outer circumference, and
the nut recess has an inner shape guiding the coupling nut having the has a non-circular outer circumference.

14. The battery pack according to any one of claims 8 to 12, wherein
the coupling shaft includes a head contacting an end surface of the core pack, and
the coupling nut and the head of the coupling shaft clamp and secure the plurality of battery blocks between the coupling nut and the head of the coupling shaft such that the plurality of battery blocks are stacked on one another.

15. The battery pack according to claim 8, further comprising
a spacer provided between an end of the core pack and a head of the coupling shaft, wherein
the head of the coupling shaft is pressed against an end surface of the core pack via the spacer to secure the plurality of battery blocks such that the plurality of battery blocks are stacked on one another.
